# EUROPEAN PATENT APPLICATION

(11) **EP 2 031 490 A2**
(43) Date of publication of application: **04.03.2009**
(21) Application number: 08252705.2
(22) Date of filing: 15.08.2008
(51) Int. Cl.: G06F 3/023

(54) **Electronic dictionary, search method for and electronic dictionary, and search program for an alectronic dictionary**

(30) Priority: 31.08.2007 JP 2007225364
(71) Applicant: Seiko Instruments Inc., Chiba-shi, Chiba (JP)
(72) Inventor: Takazawa, Kazuhisa, Chiba-shi, Chiba (JP); Saito, Jun, Chiba-shi, Chiba (JP)
(74) Representative: Cloughley, Peter Andrew

(57) **Abstract**

Provided is an electronic dictionary capable of reducing the number of operation steps for replacing a search character. The electronic dictionary is controlled by a step (S13) of list-displaying keyword candidates corresponding to an inputted character, a step (S16) of selecting an arbitrary keyword from among the displayed keyword candidates and inputting the selected keyword into a keyword input field, a step (S14) of searching an exemplary sentence database based on one or a plurality of characters inputted into the keyword input field each time an input operation is performed into the keyword input field, and a step (S15) of displaying a search result.

## Description

The present invention relates to an electronic dictionary in which a dictionary database is searched based on inputted character information, a search method for the electronic dictionary, and a search program for the electronic dictionary.

In an electronic dictionary, a dictionary database is searched with character information, which is inputted by an operator operating character keys and cursor keys, as a search key. Examples of the dictionary database include a database in which a plurality of entry words are registered in association with the pronunciation, meaning, idiom, example, and the like of the entry words, and a database in which a plurality of keywords are registered in association with exemplary sentences and phrases containing the keywords. For further studies on the electronic dictionary, it is an important factor not only to expand the dictionary database but also to improve the usability in inputting a search key and displaying a search result.

For example, JP 2005-70873 A discloses an electronic dictionary capable of searching for an exemplary sentence, an idiom, and a phrase corresponding to a word similar to an inputted word even if the word is misspelled. Meanwhile, JP 2007-94547 A includes description of an electronic dictionary capable of displaying a plurality of entry words that match an inputted character with right truncation, and determining a search character string by an operator's selection of a desired entry word.

Search methods for the electronic dictionary include a so-called Japanese-keyword exemplary sentence search. In the method, one or a plurality of Japanese keywords are inputted to search for a foreign language exemplary sentence whose Japanese translation contains all of the keywords, which is retrieved and displayed as a desired exemplary sentence. For example, if three Japanese words "eki" (=station), "aruku" (=walk), and "sugu" (=immediate) are set as keywords, a search is performed for a foreign language exemplary sentence whose Japanese translation contains all of those keywords, and if the corresponding foreign language exemplary sentence is found, the result is displayed. However, if the corresponding foreign language exemplary sentence is not found, the search must be performed again with replaced keywords.

For example, in the electronic dictionary described in JP 2007-94547 A, the search for an exemplary sentence containing all of a plurality of search character strings (keywords) is not started until all of the search character strings are inputted and a key for determining the search character strings is operated. Therefore, for example, if the exemplary sentence containing all of the search character strings is not found, the key for determining the search character strings must be operated again to perform an exemplary sentence search after one or a plurality of search character strings are erased or replaced with other character strings.

In this case, it depends on the operator to determine which keywords are to be erased or replaced and how many keywords are to be erased or replaced. This may take extra time or necessitate the replacement to be repeatedly performed, which may hinder the operator during the process of thinking about the selection of keywords.

The present invention has been made in view of the above-mentioned circumstances, and an object thereof is to improve usability of an electronic dictionary in a search performed by the same. To be specific, the present invention has an object to provide an electronic dictionary capable of reducing the number of operation steps for replacing a search character, a search method for the electronic dictionary, and a search program for the electronic dictionary.

In order to solve the above-mentioned problems, a first aspect of the present invention includes: character input means for inputting a character into a keyword input field; keyword candidate display means for list-displaying keyword candidates corresponding to the character inputted by the character input means; keyword selection means for selecting an arbitrary keyword from among the keyword candidates displayed by the keyword candidate display means; keyword input means for inputting the keyword selected by the keyword selection means into the keyword input field; search means for searching a predetermined database based on one or a plurality of characters inputted into the keyword input field each time an input operation is performed into the keyword input field by one of the character input means and the keyword input means; and search result display means for displaying a search result produced by the search means.

In a second aspect of the present invention, the input operation performed by the character input means includes an operation for inputting a character into the keyword input field and an operation for moving a cursor.

In a third aspect of the present invention, the keyword candidate display means list-displays, as the keyword candidate, words in each of which a part or an entirety of characters match the characters that have been inputted by the character input means.

In a fourth aspect of the present invention, the keyword candidate display means list-displays, as the keyword candidate, words in each of which a part or an entirety of characters are similar to the characters that have been inputted by the character input means.

A fifth aspect of the present invention includes: a character input step of inputting a character into a keyword input field; a keyword candidate display step of list-displaying keyword candidates corresponding to the character inputted in the character input step; a keyword selection step of selecting an arbitrary keyword from among the keyword candidates displayed in the keyword candidate display step; a keyword input step of inputting the keyword selected in the keyword selection step into the keyword input field; a search step of searching a predetermined database based on one or a plurality of characters inputted into the keyword input field each time an input operation is performed into the keyword input field in one of the character input step and the keyword input step; and a search result display step of displaying a search result produced in the search step.

A sixth aspect of the present invention includes a program for causing a computer to execute: a character input step of inputting a character into a keyword input field; a keyword candidate display step of list-displaying keyword candidates corresponding to the character inputted in the character input step; a keyword selection step of selecting an arbitrary keyword from among the keyword candidates displayed in the keyword candidate display step; a keyword input step of inputting the keyword selected in the keyword selection step into the keyword input field; a search step of searching a predetermined database based on one or a plurality of characters inputted into the keyword input field each time an input operation is performed into the keyword input field in one of the character input step and the keyword input step; and a search result display step of displaying a search result produced in the search step.

According to the present invention, each time an input operation is performed with respect to the keyword input field by the character input means or the keyword input means, a predetermined database is searched by the search means based on one or a plurality of characters inputted into the keyword input field, and the search result produced by the search means is displayed by the search result display means. Therefore, even if a desired search result cannot be obtained, a new search can be performed only by replacing at least one character or one word. Accordingly, it is possible to reduce the number of operation steps for replacing a character or a word within the keyword input field. In addition, each time the character or word is increased in number, the narrowed search results are displayed. Accordingly, it is possible to provide the operator with tips on which character or word to be replaced.

Embodiments of the present invention will now be described by way of further example only and with reference to the accompanying drawings, in which:
FIG. 1 is a block diagram showing an embodiment of the present invention;
FIG. 2 is a diagram showing an example of a structure of an exemplary sentence database stored in a storage unit (3) of FIG. 1;
FIG. 3 is a flowchart for explaining an operation of an electronic dictionary of FIG. 1;
FIG. 4 is a diagram showing an example of a screen displayed on a display unit (4) of FIG. 1;
FIG. 5 is a diagram showing another example of the screen displayed on the display unit (4) of FIG. 1;
FIG. 6 is a diagram showing still another example of the screen displayed on the display unit (4) of FIG. 1;
FIG. 7 is a diagram showing still another example of the screen displayed on the display unit (4) of FIG. 1;
FIG. 8 is a diagram showing still another example of the screen displayed on the display unit (4) of FIG. 1;
FIG. 9 is a diagram showing still another example of the screen displayed on the display unit (4) of FIG. 1;
FIG. 10 is a diagram showing still another example of the screen displayed on the display unit (4) of FIG. 1;
FIG. 11 is a diagram showing still another example of the screen displayed on the display unit (4) of FIG. 1;
FIG. 12 is a diagram showing still another example of the screen displayed on the display unit (4) of FIG. 1;
FIG. 13 is a diagram showing still another example of the screen displayed on the display unit (4) of FIG. 1;
FIG. 14 is a diagram showing still another example of the screen displayed on the display unit (4) of FIG. 1;
FIG. 15 is a diagram showing still another example of the screen displayed on the display unit (4) of FIG. 1;
FIG. 16 is a diagram showing still another example of the screen displayed on the display unit (4) of FIG. 1; and
FIG. 17 is a diagram showing still another example of the screen displayed on the display unit (4) of FIG. 1.

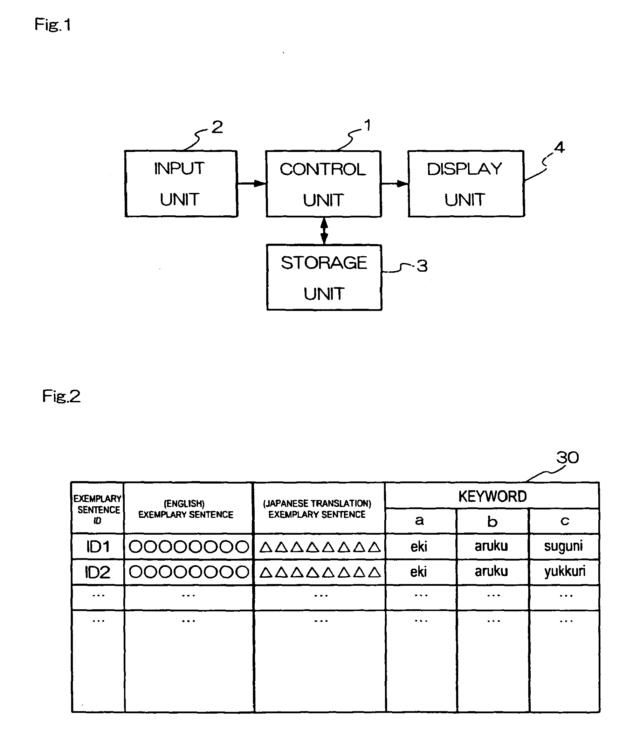

Hereinafter, description will be made of an electronic dictionary according to embodiments of the present invention with reference to the drawings. FIG. 1 is a block diagram showing a configuration of the electronic dictionary according to one embodiment of the present invention. The electronic dictionary shown in FIG. 1 includes a control unit 1, an input unit 2, a storage unit 3, and a display unit 4.

The control unit 1 is constituted of a central processing unit (CPU), a random access memory (RAM), a read-only memory (ROM), a non-volatile memory, various interface circuits, and the like, and controls each of the components by executing a program stored in the ROM.

The input unit 2 is configured by including a plurality of operation elements such as character input keys, an enter key, a space key, a symbol key such as an "&" key, a delete key and backspace key for erasing one character, four cursor keys for moving a displayed cursor that specifies an operation object vertically and horizontally, numeral input keys, and a plurality of function keys. When the operator operates an operation element of the input unit 2, information on the operated operation element is temporarily stored in the RAM within the control unit 1.

The storage unit 3 is constituted of a ROM and the like, and stores a plurality of various dictionary databases including English-Japanese and Japanese-English dictionaries. In this embodiment, the storage unit 3 stores, for example, an exemplary sentence database 30 shown in FIG. 2. The exemplary sentence database 30 shown in FIG. 2 is structured by storing a plurality of sets of an English exemplary sentence, its Japanese translation exemplary sentence, and three keywords "a" to "c" in association with exemplary sentence IDs (identification symbols). The exemplary sentences may comprise well-known or lesser-known quotations. In this example, an exemplary sentence of the exemplary sentence ID "ID1" is registered with the three keywords "eki" (=station), "aruku" (=walk), and "suguni" (=immediately), while an exemplary sentence of the exemplary sentence ID "ID2" is registered with the three keywords "eki", "aruku", and "yukkuri" (=slowly). In this example, if the exemplary sentence database 30 is searched, for example, with the two words "eki" and "aruku" as search keys (referred to also as "keywords" or "search words"), the exemplary sentence IDs "ID1" and "ID2" are extracted as corresponding search results. Alternatively, if the exemplary sentence database 30 is searched, for example, with the three words "eki", "aruku", and "suguni" as search keys, only the exemplary sentence ID "ID1" is extracted as a corresponding search result.

Further, the display unit 4 of FIG. 1 is constituted of a liquid crystal display or the like, and controlled by the control unit 1 to display a character and an image.

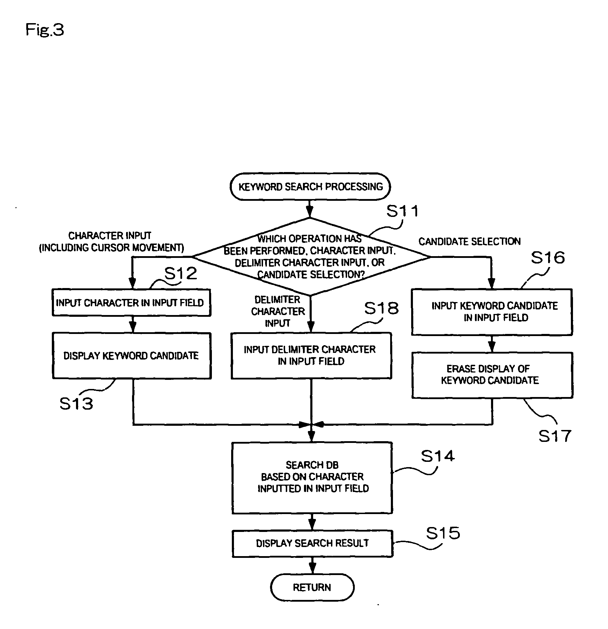

Next, description will be made of operations in a case of performing a keyword search on the electronic dictionary of FIG. 1 with reference to a flowchart of FIG. 3 and FIGS. 4 to 11 showing display screens of the display unit 4. FIG. 3 is the flowchart showing a subroutine for performing a keyword search processing, which is called by control of a main routine (not shown) or another subroutine (not shown) when a predetermined operation element is operated in the input unit 2 in a state in which a mode of performing the keyword search processing is set.

In the keyword search processing, it is first judged which operation has been performed through the operation element: an operation for inputting a character or moving the cursor on the display screen; an operation for inputting a delimiter character through the "&" key or the like; or an operation for selecting a keyword candidate through the cursor key or the enter key (Step S11).

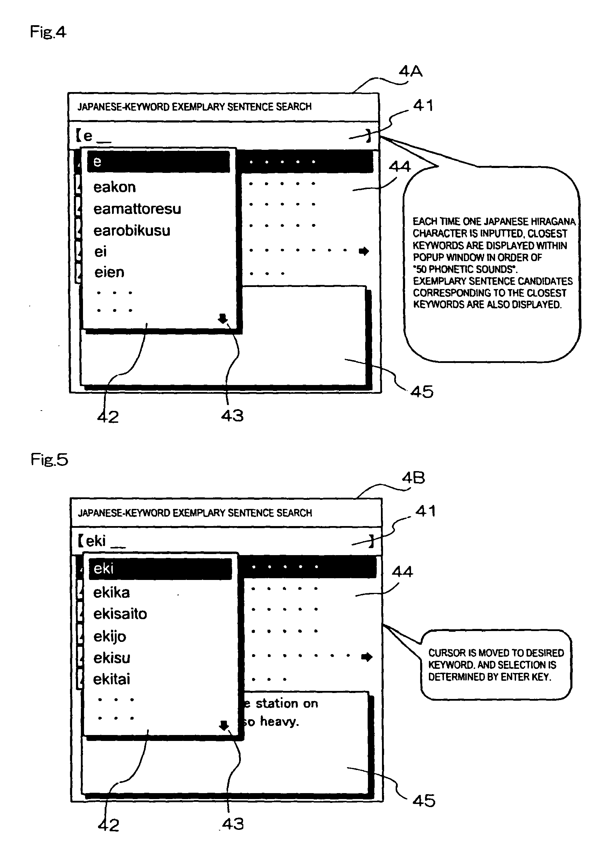

It is now assumed that one of the character keys of the input unit 2 is operated to input the Japanese hiragana character "e". Because the judgment of Step S11 results in the character input, as shown in FIG. 4, the inputted character "e" is then displayed in a keyword input field 41 on a display screen 4A of the display unit 4 (Step S12). In addition, a plurality of words whose leftward characters match the character "e" in spelling or in pronunciation are list-displayed within a popup window 42 in the order of the "50 phonetic sounds" for a keyword candidate display (Step S13). However, if one or a plurality of delimiter characters "&" between keywords have been inputted as described later, keyword candidates are displayed with regard to the characters succeeding the last delimiter character "&".

Note that the keyword candidates to be displayed are extracted by searching a database in which entry words expressed in hiragana character are associated with words to be the keyword candidates. The database is registered, for example, in the storage unit 3. In addition, a downward arrow 43 displayed within the popup window 42 indicates that the word list is to be continued.

Subsequently, the exemplary sentence database 30 shown in FIG. 2 is searched based on the character (or character string) "e" inputted into the keyword input field 41 (Step S14). In this case, in addition to the inputted character "e", a word indicated by the cursor within the popup window 42 (in the example of FIG. 4, the katakana character "e" in reverse display) is used as a search key. Then, the retrieved exemplary sentences are displayed in a display area 44 of FIG.4 (Step S15).

It is then assumed that, as shown in FIG. 5, the hiragana character "ki" is inputted, and the cursor in the popup window 42 is operated to be moved to the word "eki" among the keyword candidates. In this case, the judgment of Step S11 results in the cursor movement, and the processing of Steps S12 to S15 is performed, where a result of searching the exemplary sentence database 30 with the hiragana character string "eki" or the word "eki" as a keyword is displayed in the display area 44 on a display screen 4B. Also displayed within a popup window 45 are the contents (the English exemplary sentence and its Japanese translation exemplary sentence) of the exemplary sentence displayed on top of the display area 44 among the retrieved exemplary sentences.

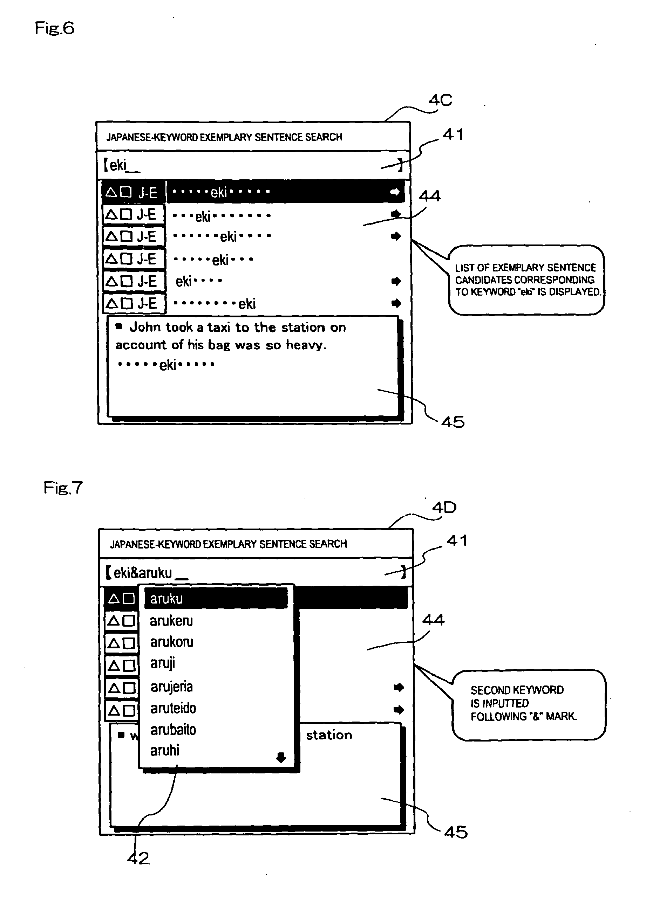

Subsequently, it is assumed that the enter key or the like is operated in the input unit 2 to select the word "eki" displayed in the popup window 42 on the display screen 4B of FIG. 5. In this case, the judgment of Step S11 results in the candidate selection, and therefore, as shown in FIG. 6, the word "eki" is inputted in the keyword input field 41 on a display screen 4C (Step S16), while the popup window 42 is erased (Step S17).

After that, the processing of Steps S14 and S15 is performed, where a result of searching the exemplary sentence database 30 based on the characters inputted in the keyword input field is displayed. Also displayed within the popup window 45 are the contents (the English exemplary sentence and its Japanese translation exemplary sentence) of the exemplary sentence displayed on top of the display area 44 among the retrieved exemplary sentences.

Next, as shown in FIG. 7, if the delimiter character "&" (ampersand) between keywords is inputted into the input unit 2, the judgment of Step S11 results in the delimiter character input, and the delimiter character "&" is inputted into the keyword input field 41. Then, the processing of Steps S14 and S15 is performed in a similar manner as described above.

If the characters "a", "ru", and "ku" are inputted as the second keyword, as shown in FIG. 7, the processing of Steps S11 to S15 is repeatedly performed to display the character string "aruku" (=walk) in the keyword input field 41 on a display screen 4D of the display unit 4, and the words whose leftward characters match the character string "aruku" in spelling or in pronunciation, such as the keyword candidate "aruku", are list-displayed within the popup window 42 (Step S13).

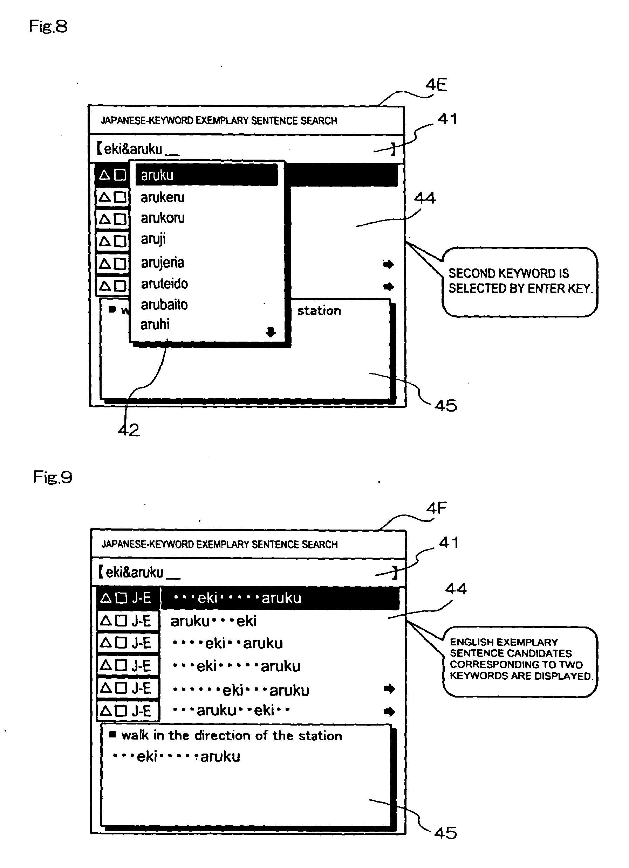

If the word "aruku" is selected from the list of the keyword candidates within the popup window 42 of FIG. 7, as shown in FIG. 8, the word "aruku" is inputted into the keyword input field 41 on a display screen 4E (Step S16). Then, as shown on a display screen 4F of FIG. 9, the popup window 42 is erased (Step S17), and the exemplary sentences that match both the keywords "eki" and "aruku" inputted in the keyword input field 41 are retrieved from the exemplary sentence database 30 (Step S14). After that, the search result is displayed in the display area 44 of the display screen 4F (Step S15).

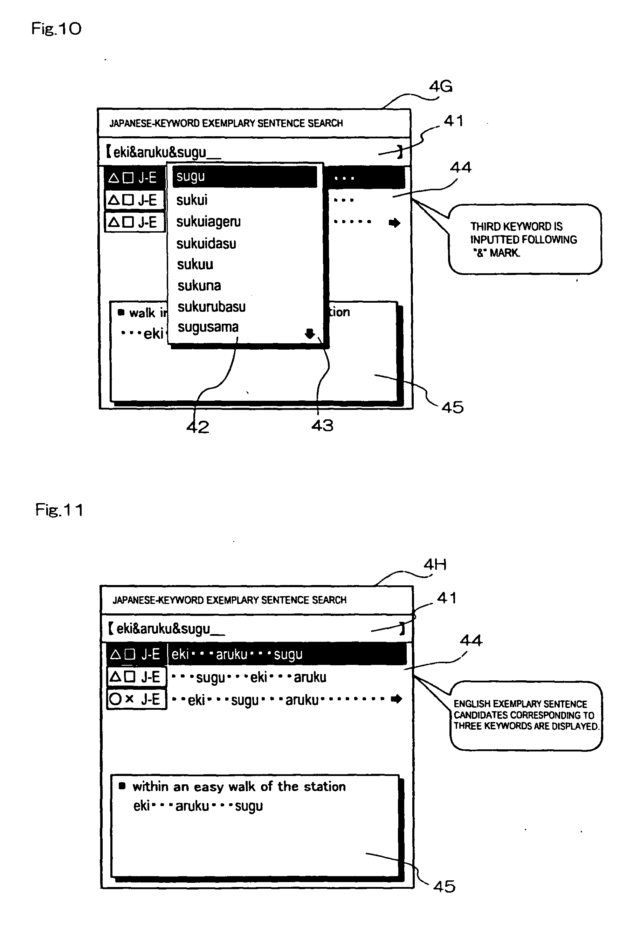

If the delimiter character "&" and the characters "su" and "gu" are further inputted, as shown on a display screen 4G of FIG. 10, the keyword candidates whose leftward characters match the character string "sugu" in spelling or in pronunciation (including the pronunciation of the characters without a voiced sound mark or a semivoiced sound mark) are list-displayed within the popup window 42.

If the word "sugu" is selected in the popup window 42, as shown on a display screen 4H of FIG. 11, a retrieval result corresponding to the three keywords "eki", "aruku", and "sugu" inputted in the keyword input field 41 is displayed in the display area 44.

As described above, according to this embodiment, each time an input operation is performed with respect to the keyword input field 41, the exemplary sentence database 30 is searched based on one or a plurality of characters inputted into the keyword input field 41, and the search result is displayed. Therefore, each time a character or a word is inputted, the narrowed search results are displayed. Accordingly, if a desired exemplary sentence cannot be found, it is possible to provide the operator with information to be tips on which character or word to be replaced.

Note that the character input judged in Step S11 includes both the above-mentioned character input and the cursor operation on the display screen. Thus, a user can input a keyword by inputting characters and/or scrolling up and down the list of keywords shown in the pop-up window 42. It also includes operations for erasing a character (and/or optionally a selected keyword) such as a delete key operation and a backspace key operation. In addition, examples of the search key used in the search for the keyword candidates to be displayed within the popup window 42 in Step S12 include not only the words whose leftward characters completely match the input character string but also a character string in which one or a plurality of hiragana characters are converted into one or a plurality of kanji characters, a character string in which one or a plurality of characters are replaced by other characters, a character string obtained by replacement of hiragana characters and katakana characters, a character string obtained by eliminating or adding a prolonged sound symbol or a voiced/semivoiced sound symbol, and a character string changed to a character string judged to be similar under predetermined conditions.

Note that, in the display of the keyword candidates corresponding to the input character string, the words in which one or a plurality of characters of the above-mentioned input character string are replaced by other characters are displayed as the keyword candidates, that is, words whose characters partially or wholly match the input character string are displayed as the candidates. This means that such a function is implemented as to be substantially equivalent to the search for the keyword candidate, which is performed automatically with one or a plurality of characters as uncertain characters, that is, a search generally called "wildcard search", which is performed with one or a plurality of characters as uncertain characters. Note that a configuration is also possible in which, upon the character input, the operator can input one or a plurality of symbols representing uncertain characters and the like to perform a wildcard search after explicitly defining the uncertain character.

Further, in the search for the words to be the keyword candidates, if the character string changed to a character string judged to be similar under predetermined conditions is used as the above-mentioned input character string, this means that, for example, the words whose characters are partially or wholly similar to the input character string are displayed as the words to be the keyword candidates. By preparing such a function as called "spell check function", for example, for English words, one example of the conditions may be judged to be established if there are words whose spellings are presumed to be correct based on the input character string, and those words may be listed as the candidates. Note that a boundary between a plurality of keywords can be expressed by not only using the delimiter character but also using a method of providing a plurality of keyword input fields on the display screen and distinguishing one from another on an input field basis.

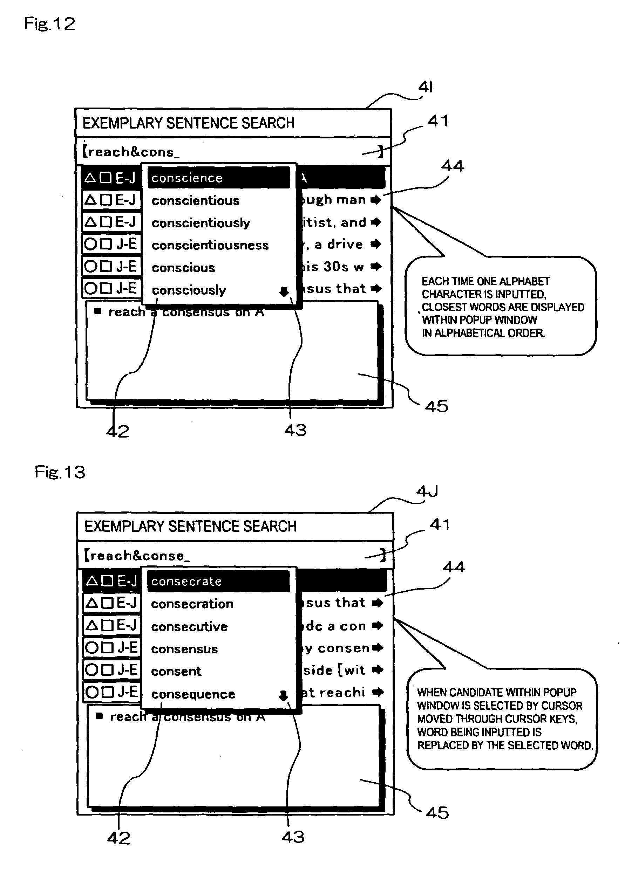

Next, description will be made of another embodiment with reference to display examples on display screens of the display unit 4 shown in FIGS. 12 to 17. In contrast to the above embodiment in which Japanese words are inputted to perform a keyword search for exemplary sentences, this embodiment is different in that the database to be searched is changed to thereby input English words for a keyword search. That is, this embodiment is different in that the database to be searched in Step S14 of the flowchart of FIG. 3 is changed to a database in which a plurality of sets of English keywords, an English exemplary sentence, and its Japanese translation exemplary sentence are registered in association with one another.

FIG. 12 shows a state in which the word "reach", the delimiter character "&", and the character string "cons" are inputted in the keyword input field 41 on a display screen 41. In this case, the English word "conscience" and the like that match the character string "cons" with right truncation are displayed within the popup window 42 as the keyword candidates. In addition, exemplary sentences retrieved based on the words "reach", "conscience", and the like are displayed in the display area 44 on the display screen 4I.

FIG. 13 shows a state in which the word "reach", the delimiter character "&", and the character string "conse" are inputted in the keyword input field 41 on a display screen 4J. In this case, the English word "consecrate" and the like that match the character string "conse" with right truncation are displayed within the popup window 42 as the keyword candidates.

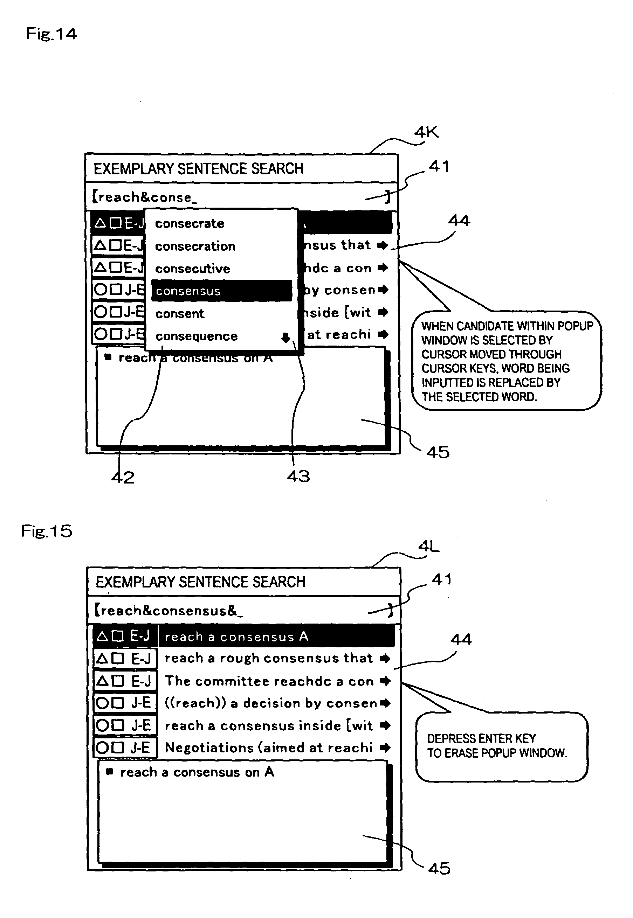

Further, FIG. 14 shows a display screen 4K in a state in which the cursor is moved to the word "consensus" within the popup window 42 on the display screen 4J of FIG. 13, and FIG. 15 shows a display screen 4L in a state in which the enter key is pressed to select the word "consensus" on the display screen 4K of FIG. 14. Exemplary sentences retrieved based on the words "reach" and "consensus" are displayed in the display area 44 of the display screen 4L.

As described above, according to this embodiment, even if the English character is inputted to search for the exemplary sentence, the search result can be updated each time the character is inputted. Therefore, even if a desired search result cannot be obtained, a new search can be performed only by replacing at least one character or one word.

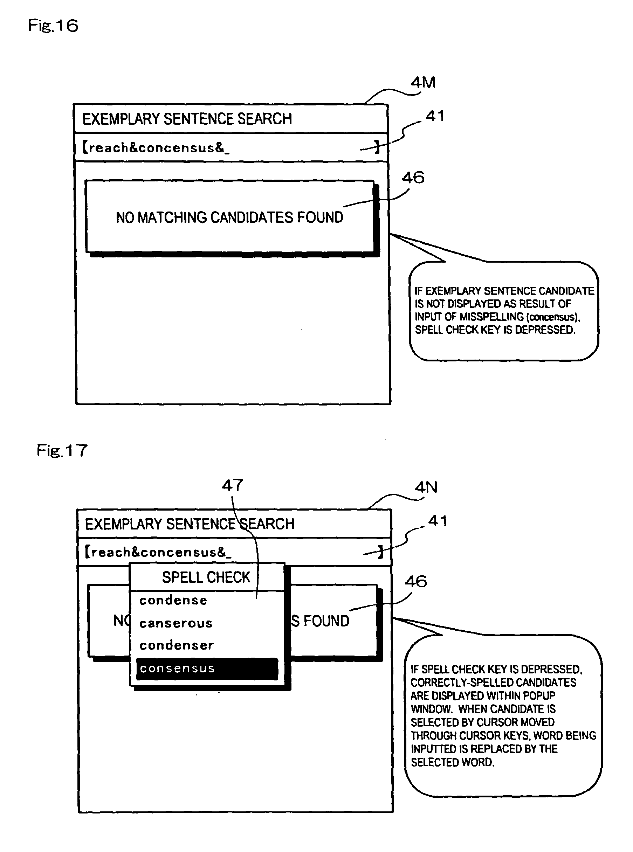

Further, in the case of inputting the English character to perform a search, for example, if any search result cannot be obtained after a misspelled character string (in this case, "concensus" (to be corrected as "consensus")) is inputted as shown on a display screen 4M of FIG. 16, a display portion 46 appears thereon with the message "No matching candidates found" to notify that any exemplary sentence cannot be retrieved. In such a case, the operator may depress a spell check key (to be included in the input unit 2) for instructing a spell check to thereby cause correct word candidates to be displayed. For example, as shown on a display screen 4N of FIG. 17, the correctly-spelled candidates obtained as a result of performing the spell check are displayed within a popup window 47. In this case, when one of the candidates is selected by the cursor moved through the cursor keys, the word being inputted is replaced by the selected word.

Note that the present invention is not limited to the above embodiments, and may be configured to be implemented by, for example, a computer on which a general-purpose operating system (OS) runs and a software program executed thereby. In this case, the program can be distributed via communication lines or computer-readable storage media.

Further, the dictionary database to which the present invention is applied is not limited to the database to be searched for exemplary sentences based on a plurality of keywords, and may be, for example, a Japanese language dictionary database or an English-English dictionary database in which entry words are registered with their corresponding meanings. In this case, for example, character strings each representing a meaning are searched based on the inputted one or a plurality of keywords, and an entry word corresponding to the retrieved meaning containing the keywords is displayed as the search result. For example, the search is performed such that the keywords "inu" (=dog)", "okii" (=big), and "kuro" (=black)" are inputted to search the character strings each representing a meaning, and if a character string that contains all of the keywords is found, the corresponding entry word (for example, "doberuman" (=doberman)) is displayed. In this case, when the word "inu" is first inputted, a plurality of entry words whose meanings contain the word "inu" are retrieved and displayed, and when the word "okii" is then inputted, a plurality of entry words representing, for example, types of big dog are retrieved and displayed.

Moreover, in an alternative embodiment the invention need not provide a dictionary function but may provide a quotation function of matching quotations to keywords without providing a function of displaying the meaning of an inputted word.

The foregoing description has been given by way of example only and it will be appreciated by a person skilled in the art that modifications can be made without departing from the scope of the present invention.

## Claims

1. An electronic apparatus, comprising:
character input means for inputting a character into a keyword input field;
keyword candidate display means for list-displaying keyword candidates corresponding to the character inputted by the character input means;
keyword selection means for selecting an arbitrary keyword from among the keyword candidates displayed by the keyword candidate display means;
keyword input means for inputting the keyword selected by the keyword selection means into the keyword input field;
search means for searching a predetermined database based on one or a plurality of characters inputted into the keyword input field each time an input operation is performed into the keyword input field by one of the character input means and the keyword input means; and
search result display means for displaying a search result produced by the search means.

2. An electronic apparatus according to claim 1, wherein the character input means is adapted to perform an input operation comprising an operation for inputting a character into the keyword input field and an operation for moving a cursor.

3. An electronic apparatus according to claim 1 or 2, wherein the keyword candidate display means is adapted to list-display, as the keyword candidate, words in each of which a part or an entirety of characters match the characters that have been inputted by the character input means.

4. An electronic apparatus according to any one of the preceding claims, wherein the keyword candidate display means is adapted to list-display, as the keyword candidate, words in each of which a part or an entirety of characters are similar to the characters that have been inputted by the character input means.

5. A search method for an electronic apparatus, comprising:
a character input step of inputting a character into a keyword input field;
a keyword candidate display step of list-displaying keyword candidates corresponding to the character inputted in the character input step;
a keyword selection step of selecting an arbitrary keyword from among the keyword candidates displayed in the keyword candidate display step;
a keyword input step of inputting the keyword selected in the keyword selection step into the keyword input field;
a search step of searching a predetermined database based on one or a plurality of characters inputted into the keyword input field each time an input operation is performed into the keyword input field in one of the character input step and the keyword input step; and
a search result display step of displaying a search result produced in the search step.

6. A search program for an electronic apparatus for causing a computer to execute:
a character input step of inputting a character into a keyword input field;
a keyword candidate display step of list-displaying keyword candidates corresponding to the character inputted in the character input step;
a keyword selection step of selecting an arbitrary keyword from among the keyword candidates displayed in the keyword candidate display step;
a keyword input step of inputting the keyword selected in the keyword selection step into the keyword input field;
a search step of searching a predetermined database based on one or a plurality of characters inputted into the keyword input field each time an input operation is performed into the keyword input field in one of the character input step and the keyword input step; and
a search result display step of displaying a search result produced in the search step.
